# EUROPÄISCHE PATENTSCHRIFT

(11) **EP 3 508 737 B1**
(45) Veröffentlichungstag und Bekanntmachung des Hinweises auf die Patenterteilung: **09.03.2022**
(21) Anmeldenummer: 18150612.2
(22) Anmeldetag: 08.01.2018
(51) Int. Cl.: F16B 5/02

(54) **VERBINDUNGSANORDNUNG FÜR SCHEINWERFERKOMPONENTEN**
CONNECTION ASSEMBLY FOR HEADLAMP COMPONENTS
DISPOSITIF DE RACCORDEMENT POUR COMPOSANTS DE PHARE

(43) Veröffentlichungstag der Anmeldung: 10.07.2019
(73) Patentinhaber: ZKW Group GmbH, 3250 Wieselburg (AT)
(72) Erfinder: Reithner, Patrick, 3671 Marbach/Donau (AT); Ruprecht, Markus, 3250 Wieselburg (AT)
(74) Vertreter: Patentanwaltskanzlei Matschnig & Forsthuber OG

(56) Entgegenhaltungen:
- EP-A1- 3 208 474
- WO-A1-2017/025240
- DE-U1- 8 909 546
- GB-A- 1 192 293
- US-A- 3 106 994

## Beschreibung

Die Erfindung betrifft eine Verbindungsanordnung, worin ein erstes und ein zweites Bauteil, insbesondere eine erste und eine zweite KFZ-Scheinwerfer-Komponente, miteinander in einer Schraubenverbindung durch ein Befestigungsmittel verbunden sind; im Besonderen ist hierbei das Befestigungsmittel derart, dass es einen Kopfteil und einen entlang einer Achse verlaufenden Schaftteil mit einem Gewindeabschnitt aufweist, und der Gewindeabschnitt des Befestigungsmittels ist in einen Befestigungskanal des ersten Bauteils eingeschraubt, während das zweite Bauteil ein Befestigungsloch aufweist, durch das der Schaftteil verläuft, und das zweite Bauteil wird mittels des Kopfteils (der auf der dem Gewindeabschnitt abgewandten Seite des Befestigungsmittels angeordnet bzw. ausgebildet ist) an dem ersten Bauteil fixiert.

Die Erfindung betrifft des Weiteren ein Verfahren zum Herstellen einer Schraubenverbindung zwischen einem ersten und einem zweiten Bauteil, insbesondere einer ersten und einer zweiten KFZ-Scheinwerfer-Komponente, unter Verwendung eines Befestigungsmittels genannter Art. Derartige Befestigungen von Scheinwerferkomponenten können z. B. die Befestigung einer Blende an einem Tragrahmen oder Gehäuseteil, die Befestigung von Blenden untereinander, Befestigung von Lichtleitern oder anderen optischen Elementen im Gehäuse sein, wobei natürlich auch vielfältige andere Anwendungsfälle der Befestigung im Rahmen der Erfindung möglich sind.

Verbindungsanordnungen der genannten Art sind wohlbekannt. In den meisten Fällen ist das Befestigungsmittel eine Kopfschraube mit oder ohne zusätzlicher Unterlagscheibe, und häufig ist der Befestigungskanal, in den das Befestigungsmittel - genauer dessen Gewindeabschnitt - eingesetzt wird, ein sogenannter Schraubdom, nämlich ein Vorsprung an dem betreffenden Bauteil, beispielsweise von im Wesentlichen zylindrischer Form, in dem der Befestigungskanal als Vertiefung, typischer Weise längs der Achse der zylindrischen Form, vorgesehen ist. Ein derartiger Schraubdom geht an seinem Fuß in das zu verbindende Bauteil ("erstes Bauteil") über. In dem anderen ("zweiten") Bauteil ist dagegen in der Regel lediglich ein entsprechendes Loch, gegebenenfalls auch Langloch, vorgesehen. Die mechanische Verbindung kommt durch Einschrauben des Befestigungsmittels zustande, dessen Schaft durch das Loch im zweiten Bauteil geführt und in den Befestigungskanal bzw. Schraubdom eingesetzt wird, und durch Festziehen in dem Befestigungskanal wird eine Verbindung zwischen dem ersten und dem zweiten Bauteil erreicht, typischer Weise eine lösbare Fixierung durch Formschluss.

Schraubdome bekannter Art stellen eine beträchtliche Anhäufung von Material dar. Zudem treten bei Schraubdomen in Kunststoff-Bauteilen häufig Einfallstellen an der dem Schraubdom gegenüberliegenden Seite des ersten Bauteils auf. Hierbei wird unter Einfallstelle eine (in der Regel unerwünschte) Verformung der Oberfläche verstanden, die nach dem Abformen des Bauteils - insbesondere bei Herstellung durch Spritzguss - aufgrund der thermischen Kontraktion während des Abkühlens auftritt, meist als mehr oder weniger flache Vertiefung gegenüber der umgebenden Oberfläche des Bauteils.

In EP 3208474 A1 ist eine Verbindungsvorrichtung offenbart, worin ein erstes Bauteil und ein zweites Bauteil mithilfe einer Gewindeschraube verbunden sind. Das erste Bauteil weist einen ersten plattenförmigen Anschlussabschnitt mit einer Befestigungsausnehmung auf, und das zweite Bauteil hat einen zweiten plattenförmigen Anschlussabschnitt - der quer zur Erstreckung des ersten Anschlussabschnitts verläuft - mit einer Durchgangsöffnung, durch die der Schraubenschaft der Gewindeschraube ragt und in die Befestigungsausnehmung eingeschraubt ist. Weitere Schraubverbindungen für zwei Elemente sind in US 1,192,293 und US 3,106,994 sowie DE 8909546 U1 beschrieben.

Es besteht daher ein Bedarf nach einer Verbindungsanordnung, bei der der Befestigungskanal auf materialsparende Weise im Vergleich zu herkömmlichen Lösung erreicht werden kann, und die das Auftreten von Einfallstellen vermeiden hilft. Hierbei soll die Formgebung der Komponenten der Verbindungsanordnung eine Herstellung mit z.B. Spritzguss gestatten, bei der die Bauteile einfach abgeformt werden können, d.h. ohne dass zusätzliche sogenannte Schieber in der Spritzgussform eingesetzt werden müssen.

Diese Aufgabe wird ausgehend von einer Verbindungsanordnung gelöst, bei welcher erfindungsgemäß das erste Bauteil zwei oder mehr entlang der Achse verlaufende Ansatzstücke aufweist, welche als zapfenartige Vorsprünge auf einer Basisfläche des ersten Bauteils ist ausgebildet sind, die voneinander getrennt sind, und welche jeweils eine dem Befestigungskanal zugewandte Innenfläche aufweisen, an der das Ansatzstück mit dem Gewindeabschnitt des Befestigungsmittels gewindemäßig zusammenwirkt, wobei die Innenfläche nur einen sektorartigen Teilbereich des Befestigungskanals ausmacht und die Innenflächen gemeinsam den Befestigungskanal im ersten Bauteil bilden.

In einer bevorzugten Weiterbildung begrenzt jede Innenfläche einen von mehreren, zueinander auf Lücke angeordneten sektorartigen Teilbereichen des Befestigungskanals.

Diese Lösung gestattet eine Verwirklichung des Befestigungskanals, die anstelle eines Schraubdoms eine Aufnahmestruktur aus einer Anzahl von Ansatzstücken vorsieht, beispielsweise in Form einer Rippe mit einer darin ausgebildeten Unterbrechung, in die die Schraube (Befestigungsmittel) eingesetzt wird. Das führt zu einer deutlichen Reduzierung des verwendeten Materials, vermeidet somit eine Materialanhäufung, und verringert die effektive Wandstärke am Fuß der Verbindungsanordnung. Diese Verringerung reicht aus, dass eine Einfallstelle an der gegenüberliegende Bauteilseite unterbleibt oder zumindest stark reduziert ist, sodass keine Einfallstelle mehr sichtbar ist. Dies ist besonders bei Befestigungen vorteilhaft, wo die Einfallstelle sichtbar wäre, beispielsweise an einer Außenwand eines Scheinwerfergehäuses, oder bei der Befestigung einer Blende oder anderen optischen Komponente an einer Streuscheibe eines Scheinwerfers.

Die Ansatzstücke gemäß der Erfindung bilden gemeinsam eine Aufnahmestruktur, die an einer für die Verbindung vorgesehenen Stelle des ersten Bauteil angesetzt ist, z.B. angeformt und zugleich mit dem ersten Bauteil bei dessen Herstellung erzeugt, oder gegebenenfalls auch nachträglich aufgesetzt werden kann. Insbesondere können die Ansatzstücke spritzgusstechnisch hergestellt werden, ohne dass zusätzliche Schieber erforderlich würden. Die Anzahl der Ansatzstücke kann je nach Belastung und Platzangebot geeignet gewählt werden. Die erfindungsgemäße Aufnahmestruktur lässt auch den Einsatz von größeren Schraubengewinden zu, ohne dass das Wandstärkenverhältnis abgewandelt werden muss. Gegebenenfalls kann die Aufnahmestruktur auch unter Beteiligung von Führungselementen, die dem zweiten Bauteil zugehören, gebildet sein.

In einer besonders einfachen und dennoch wirksamen Ausgestaltung der Erfindung können die Ansatzstücke rippenförmig ausgebildet sein. Hierbei können sie insbesondere radial auswärts von der Achse verlaufen. Sie können alternativ auch zueinander paarweise parallel angeordnet sein.

Das Befestigungsmittel kann typischer Weise eine Kopfschraube sein, deren Kopf den genannten Kopfteil bildet. Alternativ kann es ein Gewindestift sein, auf dem eine Mutter zum Ausbilden des Kopfteils vorgesehen ist.

Um eine einfache und doch effiziente Zentrierung der beiden Bauteil zueinander zu erreichen, kann es vorteilhaft sein, wenn das zweite Bauteil zum ersten Bauteil hin vorspringende Führungselemente aufweist. Diese Führungselemente können den Ansatzstücken seitlich anliegende Flanken aufweisen und somit eine Bewegung zwischen dem ersten und dem zweiten Bauteil quer zur Achse begrenzen. Durch diese Weiterbildung gelingt zugleich eine Befestigung und Zentrierung der beiden Bauteile in der Verbindungsanordnung. Hierbei können die Flanken der Führungselemente und/oder Flächen der Ansatzstücke, denen die Flanken seitlich anliegen, gegenüber der Richtung der Achse geneigt sein. Die Führungselemente können auch eine die Ansatzstücke umgebende Hülse (oder Einhausung) bilden. Auch können derartige vorspringende Führungselemente in korrespondierende, in den Ansatzstücken vorgesehene Vertiefungen formschlüssig eingreifen.

Um eine einfache und kostensparende Ausführung der Ansatzstücke zu erreichen, kann vorgesehen sein, dass sie einstückig mit dem ersten Bauteil bzw. einer quer zur Achse verlaufenden Basisfläche des ersten Bauteils sind.

Die Innenflächen können zu Anfang ohne Innengewindeflächen ausgeführt sein, was die Herstellung der Ansatzstücke vereinfacht. In einem solchen Fall ist es günstig, wenn der Gewindeabschnitt des Befestigungsmittels ein selbstschneidendes Gewinde aufweist.

Die erfindungsgemäße Verbindungsanordnung eignet sich insbesondere für einen Kraftfahrzeugscheinwerfer, in welchem zwei Komponenten durch eine Verbindungsanordnung wie hier offenbart verbunden sind.

Die gestellte Aufgabe wird auch durch ein Verfahren zum Herstellen einer Schraubenverbindung der eingangs genannten Art gelöst, welches Verfahren folgende Schritte umfasst:
- Einschrauben des Gewindeabschnitts des Befestigungsmittels in einen Befestigungskanal einer Aufnahmestruktur des ersten Bauteils, wobei der Befestigungskanal durch zwei oder mehr dem Befestigungsmittel zugewandte, nur sektorweise ausgebildete Innenflächen jeweils eines entlang der Achse verlaufenden Ansatzstücks gebildet ist und über die zumindest eine Innenfläche mit dem Gewindeabschnitt des Befestigungsmittels gewindemäßig zusammenwirkt, wobei die Ansatzstücke als zapfenartige Vorsprünge auf einer Basisfläche des ersten Bauteils ausgebildet sind, die voneinander getrennt sind,
- Einsetzen des Befestigungsmittels in das zweite Bauteil dadurch, dass der Schaftteil durch ein Befestigungsloch des zweiten Bauteils geführt wird, wobei dies - je nach Montageverfahren und/oder Ausführung der Bauteile und insbesondere des Befestigungsmittels - vor oder nach dem Einschrauben des Gewindeabschnitts erfolgt,
   und sodann
- Fixieren des zweiten Bauteils mittels eines Kopfteils (der auf der dem Gewindeabschnitt abgewandten Seite des Befestigungsmittels ausgebildet ist) an dem ersten Bauteil.

Im Falle mehrerer Innenflächen sind diese bevorzugt auf jeweils einem von entlang der Achse verlaufenden Ansatzstücken des ersten Bauteils dem Befestigungskanal zugewandt ausgebildet, wobei jede Innenfläche einen von mehreren, zueinander auf Lücke angeordneten sektorartigen Bereichen des Befestigungskanals begrenzt.

Als Befestigungsmittel kann beispielsweise eine Kopfschraube verwendet werden, die zuerst in das Befestigungsloch eingesetzt wird und danach in den Befestigungskanal eingeschraubt wird. Der Kopfteil ist hierbei fester Teil der Kopfschraube, beispielsweise kann er einstückig mit dem Schaftteil sein. Als eine Alternative hierzu kann als Befestigungsmittel ein Gewindestift verwendet werden, auf den ein Kopfbauteil angebracht wird, beispielsweise indem eine Mutter aufgeschraubt wird; der Gewindestift kann nach oder vorzugsweise vor dem Einsetzen in das zweite Bauteil in den Befestigungskanal eingeschraubt werden.

Die Erfindung samt weiterer Ausbildungen und Vorzüge wird im Folgenden anhand einiger beispielhafter Ausführungsformen näher erläutert, welche in den beigefügten Zeichnungen dargestellt sind. Die Zeichnungen zeigen in schematischer Form:
- Fig. 1: eine Verbindungsanordnung gemäß einer ersten Ausführungsform, die nicht zur Erfindung gehört,einer Seitenansicht;
- Fig. 2a-2c: zeigen eine Verbindungsanordnung gemäß einer zweiten Ausführungsform der Erfindung mit Führungselementen, und zwar Fig. 2a eine Seitenansicht der Verbindungsanordnung, Fig. 2b eine Schnittansicht quer zur Längsachse gemäß Line A-A in Fig. 2c, und Fig. 2c eine explodierte Darstellung der Seitenansicht;
- Fig. 3a und 3b: zeigen eine weitere Ausführungsform, die nicht zur Erfindung gehört, in einer Schnittansicht quer zur Längsachse (Fig. 3a) und einer Längsschnittansicht (Fig. 3b) entsprechend den Schnittebenen D-D bzw. B-B;
- Fig. 4a und 4b: zeigen noch eine Ausführungsform der Erfindung in einer Schnittansicht quer zur Längsachse (Fig. 4a) und einer Längsschnittansicht (Fig. 4b) entsprechend den Schnittebenen F-F bzw. E-E;
- Fig. 5: illustriert eine weitere Ausführungsform der Erfindung anhand einer Schnittansicht quer zur Längsachse; und
- Fig. 6: illustriert eine andere Ausführungsform der Erfindung anhand einer Schnittansicht quer zur Längsachse.

In den folgenden Figuren werden für gleiche oder vergleichbare Elemente zum Zwecke der einfacheren Erläuterung und Darstellung gleiche Bezugszeichen verwendet. Zudem sollen die in den Ansprüchen verwendeten Bezugszeichen lediglich die Lesbarkeit der Ansprüche und das Verständnis der Erfindung erleichtern und haben keinesfalls einen den Schutzumfang der Erfindung einschränkenden Charakter. Wo in dieser Offenbarung - insbesondere in den Ansprüchen - Begriffe der räumlichen Lage wie "horizontal", "vertikal", "oben", "rechts", "links", und diesen entsprechende Bezeichnungen verwendet werden, beziehen sich diese lediglich auf eine Orientierung der Verbindungsanordnung bzw. des diese enthaltenden Scheinwerfers wie in den hier vorliegenden Zeichnungen gegeben, und es versteht sich, dass die Orientierung in einer tatsächlichen Einbaulage eine andere sein kann, ohne dass dies eine Abweichung vom Schutzumfang begründen kann.

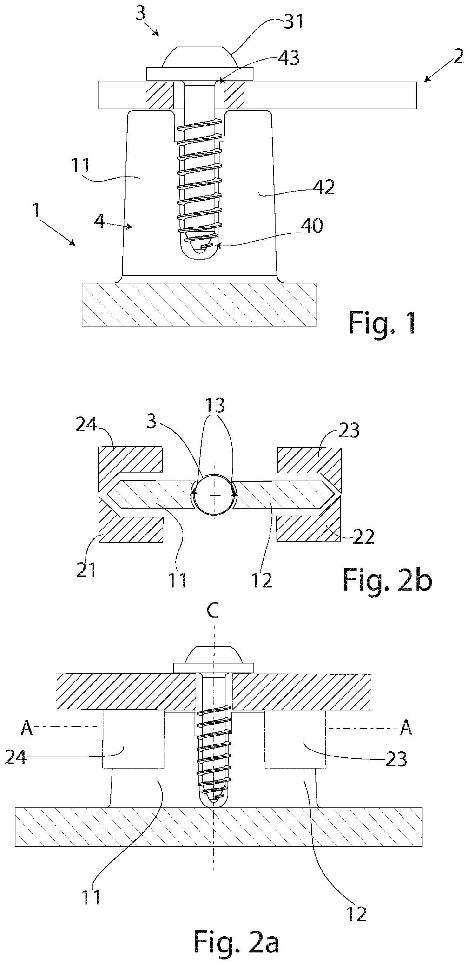

Gemäß Fig. 1 wird ein erstes Bauteil 1, beispielsweise eine Komponente eines Scheinwerfers, mithilfe einer Schraubenverbindung mit einer Kopfschraube 3 als Befestigungsmittel mit einem Gegenstück (zweiten Bauteil) 2 verbunden. In den Figuren ist jeweils nur ein Ausschnitt der verbundenen Bauteile 1 und 2, nämlich jener Bereich, der an der Herstellung der erfindungsgemäßen Verbindungsanordnung beteiligt ist, gezeigt; beispielsweise etwa ein Wand-Teilbereich des Bauteils 1 und seitens des Bauteils 2 eine Befestigungslasche an der Innenseite des Gehäuses des Scheinwerfers (oder umgekehrt). An der für die Verbindung vorgesehenen Stelle des ersten Bauteils 1 ist eine Aufnahmestruktur 4 mit einer Ausnehmung 40, in die die Kopfschraube 3 einschraubbar bzw. eingeschraubt ist, ausgebildet. Die Aufnahmestruktur 4 ist in diesem Ausführungsbeispiel als rippenartige Struktur gestaltet, die durch die Ausnehmung 40, in die die Kopfschraube 3 eingesetzt wird, in zwei Ansatzstücke 41, 42 geteilt ist, die einander in Bezug auf die Achse der Ausnehmung 40 gegenüber liegend angeordnet sind. In dem zweiten Bauteil 2 ist eine Bohrung 43 vorgesehen, durch die die Kopfschraube 3 eingesetzt ist, und das Bauteil 2 wird so zwischen den Ansatzstücken 41, 42 und dem Kopf 31 der Kopfschraube 3 gehalten und fixiert.

In (nicht gezeigten) Ausführungsvarianten der Erfindung kann die Bohrung 43 bzw. die Spitze der Schraube 3 auch in die Basis 15 hineinragen, in besonderen Fällen sogar hindurchragen. Dies ist jedoch in typischen Anwendungsfällen der Erfindung nicht erforderlich oder nicht einmal erwünscht, um zu vermieden, dass die Stelle der Befestigung an der außenliegenden Seite (in der Zeichnung die Unterseite) des Bauteils 2 sichtbar wird.

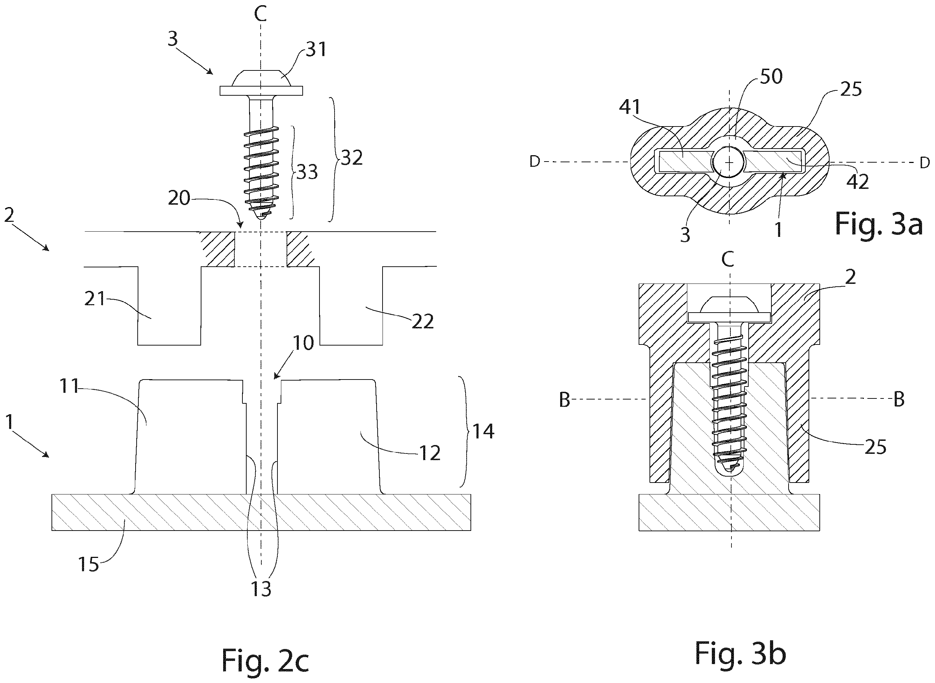

Die Fig. 2a-2c zeigen eine zweite Ausführungsform der Erfindung, worin Führungselemente 21, 22 die Ausrichtung der relativen Position der verbundenen Bauteile 1, 2 erleichtern. Fig. 2a zeigt eine Seitenansicht in montiertem Zustand der Verbindungsanordnung und Fig. 2b eine zugehörende Schnittansicht gemäß Schnittebene A-A der Fig. 2a, während Fig. 2c eine explodierte Darstellung zeigt. In den Seitenansichten ist der Bauteil 2 zumindest im Bereich um die Bohrung 20 geschnitten (längs der Achse C) dargestellt.

In der Ausführungsform der Fig. 2a-2c ist eine rippenartige Aufnahmestruktur 14 für ein Befestigungsmittel, hier eine Kopfschraube 3, durch zwei zapfenartige Vorsprünge 11, 12 gebildet, die hier Ansatzstücke im Sinne der Erfindung darstellen. Zwischen den Vorsprüngen 11, 12 kann die Kopfschraube 3 aufgenommen werden, nämlich durch Einschrauben längs der Achse C. Die Schraube 3 gliedert sich nach an sich bekannter Art in einen Kopfteil 31 und einen Schaftteil 32, der einen Gewindeabschnitt 33 aufweist. Zwischen den Vorsprüngen 11, 12 besteht ein Abstand, der einem längs der Achse C verlaufenden Befestigungskanal 10 entspricht. Die Aufnahmestruktur 14 tritt somit dank der Erfindung an die Stelle eines Schraubdoms herkömmlicher Art. Die Gestaltung des Befestigungskanals 10 und des Befestigungsmittels 3 - genauer des Gewindeteils 33 - sind einander entsprechend im Hinblick auf die zu erreichende Schraubenverbindung ausgelegt, wie nachstehend weiter erläutert wird.

Die Vorsprünge 11, 12 sind getrennt auf einer Basisfläche 15 angeformt und vorzugsweise einstückig mit dieser; die Basisfläche 15 ist z.B. ein Stück einer Außenwand eines Scheinwerfergehäuses oder eine Befestigungslasche einer Scheinwerfer-Komponente (z.B. einer Blende oder eines anderen optischen Elements). Jeder Vorsprung 11, 12 weist eine Innenfläche 13 auf, welche dem Befestigungskanal 10 bzw. der darin einzusetzenden Schraube 3 zugewandt ist; die Innenflächen bilden somit gemeinsam einen Befestigungskanal 10, der in Zusammenwirken mit dem Gewindeteil 33 der Schraube 3 das Ausbilden einer belastbaren Schraubenverbindung gestattet. Die Innenflächen 13 weisen bevorzugt eine konkave Form auf, die einer zylindrischen oder konischen Formgebung des Befestigungskanals 10 entspricht.

Bezugnehmend insbesondere auf Fig. 2b bildet jede Innenfläche 13 je einen Sektorbereich des Befestigungskanals 10, die Innenflächen sind jedoch hinsichtlich des Umfangswinkels auf Lücke zueinander angeordnet. Insgesamt bilden die Innenflächen 13 gemeinsam den Befestigungskanal 10, ungeachtet der zwischen ihnen bestehenden freien Bereiche.

Auf den Innenflächen 13 können Innengewinde (genaugenommen Innengewindesektoren) als Gegengewinde vorgeformt sein, jedoch sind die Innenflächen bevorzugt als einfache, glatte konkave Flächen ausgebildet, auf denen ein Gegengewinde erst beim Einschrauben des Befestigungsmittels (mittels gewindefurchenden Gewindes) gebildet wird. Dadurch ergibt sich zusätzlich zum Formschluss ein gesteigerter Kraftschluss.

Seitens des Gegenstücks 2 ist eine Zentrierung / Führung in Form von vorspringenden Führungselementen und/oder zur Aufnahmestruktur hin vorgelagerten Zentrierkomponenten vorgesehen, die ein Ausweichen der Aufnahmestruktur 14 und/oder des Befestigungsmittels 3 verhindern. Wie in Fig. 2a und 2b ersichtlich ist, weist das Gegenstück an der Seite, die dem ersten Bauteil 1 zugewandt ist, z.B. vier Vorsprünge in Form L-förmiger Zapfen 21, 22, 23, 24 auf. Diese Zapfen 21-24 weisen seitliche Flanken auf, die den Vorsprüngen 11, 12 seitlich anliegen und so eine seitliche Ausweichbewegung durch Formschluss unterbinden. Die Flanken sind gegenüber der Vertikalen, d.h. die Richtung parallel zur Achse C, um einen kleinen Winkel geneigt, was ein Zusammenführen der Vorsprünge 11, 12 in den Raum zwischen den Zapfen 21-24 erleichtert. Dieser Winkel kann beispielsweise bei 30° liegen, aber auch geringer sein (z. B. 10°); in Abhängigkeit von der gewünschten Anwendung kann der Winkel geeignet gewählt werden, wobei im Allgemeinen der Winkel in einem Bereich von größer als 0° bis zu ca. 45° (in besonderen Fällen sogar bis zu 80°) liegen kann. Die Vorsprünge 11, 12 können zweckmäßiger Weise in einem gleichen Winkel wie die Flanken der Zapfen 21-24 geneigt sein. Durch die Führungselemente 21-24 wird somit in Zusammenwirken mit den Vorsprüngen 11, 12 ein seitliches Ausweichen und/oder gegenseitiges Verkippen der Komponenten 1, 2, 3 gegenüber der Achse C verhindert.

Die Montage der Verbindungsanordnung der Fig. 2a erfolgt beispielsweise dadurch, dass die Kopfschraube 3 durch das Befestigungsloch 20 im Gegenstück 2 geführt wird, und von der anderen Seite das erste Bauteil 1 herangeführt wird, wobei die Zapfen 21-24 mit den Vorsprüngen 11, 12 als Zentrierung dienen. Sobald das Ende der Schraube 3 mit den Innenflächen 13 im Befestigungskanal 10 in Kontakt kommt, wird durch Einschrauben der Schraube 3 die Schraubenverbindung hergestellt. In der Regel wird die Schraube angezogen, bis durch Anschlag zwischen den Bauteilen 1, 2 (z.B. Anschlag der Vorsprünge 11, 12 an der Innenseite des Bauteils 2) die gewünschte Endlage in der Verbindungsanordnung erreicht wird.

In einer Variante können zuerst die beiden Bauteile 1, 2 zusammengeführt werden, beispielsweise bis in ihre relative Endlage, und sodann wird die Schraube 3 durch die Bohrung 20 in den Befestigungskanal 10 eingesetzt und eingeschraubt.

In besonderen Ausführungsvarianten kann die Bohrung 20 ein Innengwinde (nicht gezeigt) aufweisen, durch das das Befestigungsmittel 3 eingeschraubt wird, obgleich die Bohrung in der Regel ohne Innengewinde und gegenüber dem Gewinde des Befestigungsmittel freigestellt ausgeführt ist.

Die Führung für die Ansatzstücke kann auch in Form einer hülsenartigen Struktur ausgebildet sein, die die Aufnahmestruktur zur Gänze oder zum Teil umgibt. Dies ist in dem Ausführungsbeispiel der Fig. 3a und 3b illustriert. Hier sind die Ansatzstücke 41, 42 ähnlich wie in der Ausführungsform der Fig. 1 ausgebildet. Zusätzlich sind seitens des zweiten Bauteils 2 Führungselemente vorgesehen, die zu einer hülsenartigen Führung 25 verbunden sind. Innenflächen dieser hülsenartigen Führung 25 liegen den Flanken der Ansatzstücke 41, 42 an und sorgen für eine Zentrierung in Bezug auf die Achse C.

Im mittleren Bereich verläuft der Innenrand der Führung 25 in einem vorgegebenen Abstand zur Achse C, wodurch eine Freistellung 50 für das Gewinde der Schraube erreicht wird. Dies vermeidet eine gegebenenfalls unerwünschte Festlegung der Lage der Schraube entlang der Achse C in Bezug auf das zweite Bauteil 2.

Auch in dieser und den weiteren Ausführungsbeispielen können die seitlichen Flanken gegenüber der Vertikalen leicht geneigt sein, um ein leichteres Einstellen der anfänglichen relativen Position der Bauteile 1, 2 zu ermöglichen.

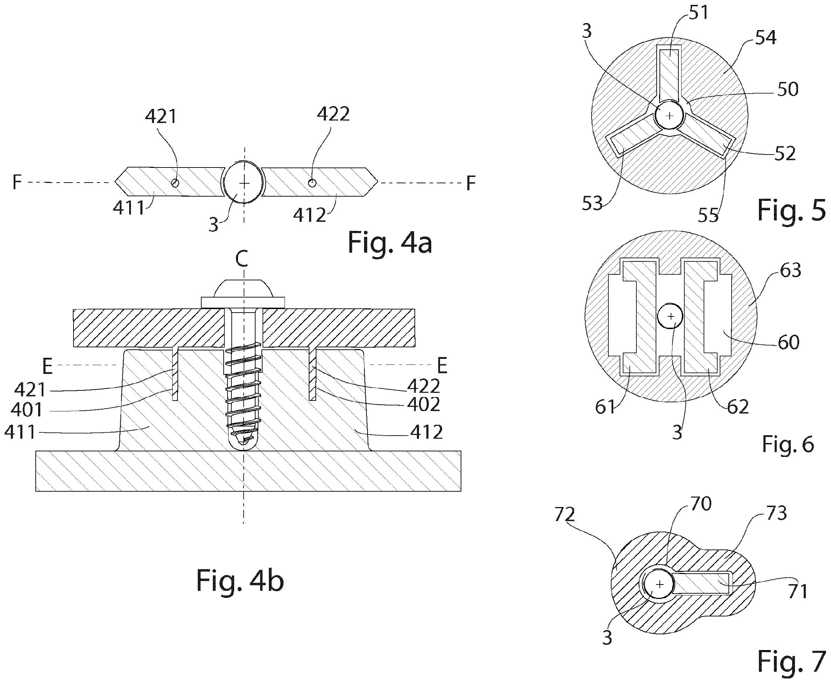

In Fig. 4a und 4b ist ein weiteres Ausführungsbeispiel gezeigt. Die Ansatzstücke 411, 412 sind hier rippenförmig gestaltet und weisen zusätzlich Vertiefungen 401, 402 auf, die beispielsweise als parallel zur Achse C verlaufende zylindrische oder konische Öffnungen gebildet sind. Seitens des Gegenstücks sind Führungselemente 421, 422 vorgesehen, die zum ersten Bauteil hin vorspringen. Diese greifen im montierten Zustand in die Vertiefungen 401, 402 ein und unterbinden so ein seitliches Ausweichen. Die Weite der Vertiefungen 401, 402 und der korrespondierenden Führungselemente 421, 422 kann je nach Anwendung geeignet gewählt werden und insbesondere größer als in Fig. 4a und 4b gezeigt sein.

Fig. 5 illustriert eine weitere Ausführungsform der Erfindung in einer Querschnittansicht. Drei Ansatzstücke 51, 52, 53 sind vorgesehen, die radial auswärts von der Achse C verlaufen. Seitens des Gegenstücks können entsprechend geformte Führungselemente vorgesehen sein, beispielsweise in hülsenartiger Form (Einhausung) 54 mit einer einfachen, z.B. zylindrisch/konischen Außenfläche, in deren Inneren eine sternartige Ausnehmung 55 zur Aufnahme der Ansatzstücke 51-53 gebildet ist. Auch hier kann zusätzlich in der Ausnehmung eine Freistellung 50 für das Gewinde des Befestigungsmittels 3 vorgesehen sein.

In weiteren Varianten kann die Anzahl der Ansatzstücke auch mehr als drei sein, beispielsweise, vier, fünf, sechs, acht usw. Hierbei können die Ansatzstücke zudem symmetrisch in Bezug auf die Achse C angeordnet sein, insbesondere in gleichen Winkelabständen um die Achse und/oder spiegelsymmetrisch bezüglich einer Ebene entlang der Achse C (oder zwei Ebenen im rechten Winkel).

Ebenso ist die Form der Ansatzstücke im Rahmen der Erfindung nicht auf radial orientierte rippenartige Element beschränkt. Fig. 6 illustriert anhand einer weiteren Querschnittansicht ein Beispiel einer Auslegung mit plattenartigen Ansatzstücken 61, 62 des ersten Bauteils.

Einander zugewandte Innenflächen der Ansatzstücke 61, 62 treten im montierten Zustand in Kontakt mit dem Gewinde des Befestigungsmittels 3. Eine Führungskomponente 63 des zweiten Bauteils umgibt die Ansatzstücke 61, 62 nach Art einer Einhausung, hierzu ist eine Ausnehmung 60 im Inneren der Führungshülse 63 vorgesehen, welche Innenflächen aufweist, die an Außenflächen der Ansatzstücke 61, 62 anliegen und die seitliche Positionierung festlegen.

In Fig. 7 ist eine weitere Ausführungsform, die nicht zur Erfindung gehört, demonstriert, in der lediglich ein Ansatzstück 71 seitens des ersten Bauteil vorgesehen ist. Der Befestigungskanal 70 wird hierbei von der Innenfläche des Ansatzstücks 71 sowie der Innenwand der umgebenden Führungshülse 72, die Teil des zweiten Bauteils ist, gebildet. Der Innendurchmesser der Führungshülse 72 ist gleich groß, gegebenenfalls auch etwas größer, als der Außendurchmesser des Gewindeteils 33 der Schraube 3. Die Schraube 3 wird somit in dem so gebildeten Befestigungskanal 70 geführt.

Nach dem Einsetzen der Schraube 3 wird das erste Bauteil eingeführt, sodass das Ansatzstück 71 in den ausgebuchteten Abschnitt 73 der Hülse 72 positioniert wird; hierbei wird die Schraube 3 gedreht, wobei sie in die ihr zugewandte Innenseite des Ansatzstücks 71 greift und dort furcht. Auf diese Weise wird die Gewindeverbindung erzeugt, wobei zugleich der erste Bauteil über das Ansatzstück 71 in seine Endlage gezogen wird. Wenn alternativ dazu zuerst das erste Bauteil eingesetzt wird, sodass das Ansatzstück sich bereits in der in Fig. 7 gezeigten Endlage in dem ausgebuchteten Abschnitt 73 befindet, wird dann die Schraube 3 eingedreht, wodurch diese sich in die ihr zugewandte Innenseite des Ansatzstücks 71 furcht; hierbei stützt sie sich an der Innenwand der Führungshülse 72 ab. Hierbei kann sich die Innenwand durch das Abstützen der Schraube gegebenenfalls etwas deformieren, aber die Schraube 3 wird sich nicht in die Innenwand furchen.

Es versteht sich, dass die hier beschriebenen Ausführungsformen lediglich der Illustration dient und nicht als für die Erfindung einschränkend aufzufassen sind; vielmehr fallen unter den Schutzbereich der Erfindung sämtliche Ausgestaltungen, die der Fachmann anhand der Beschreibung finden kann, wobei der Schutzbereich durch die Ansprüche festgelegt ist. Insbesondere kann in jedem der Ausführungsbeispiele die jeweils verwendete Schraube durch einen Bolzen, Gewindestift od.dgl. ersetzt sein, wobei anstelle eines Schraubenkopfes ein Splint, eine Mutter oder ein anderes Kopfelement zur Anwendung kommen kann.

## Patentansprüche

1. Verbindungsanordnung, worin ein erstes und ein zweites Bauteil (1, 2), insbesondere eine erste und eine zweite KFZ-Scheinwerfer-Komponente, miteinander in einer Schraubenverbindung durch ein Befestigungsmittel (3) verbunden sind, welches einen Kopfteil (31) und einen entlang einer Achse (C) verlaufenden Schaftteil (32) mit einem Gewindeabschnitt (33) aufweist,
wobei der Gewindeabschnitt (33) des Befestigungsmittels (3) in einen Befestigungskanal (10) des ersten Bauteils (1) eingeschraubt ist,
wobei das zweite Bauteil (2) ein Befestigungsloch (20) aufweist, durch das der Schaftteil (32) verläuft, und das zweite Bauteil (2) mittels des Kopfteils (31) an dem ersten Bauteil (1) fixiert wird,
**dadurch gekennzeichnet, dass**
das erste Bauteil (1) eine Basisfläche (15) und zwei oder mehr entlang der Achse (C) verlaufende Ansatzstücke (11,12, 411, 412) aufweist, welche als zapfenartige Vorsprünge auf der Basisfläche (15) ausgebildet sind, die voneinander getrennt sind, und welche jeweils eine dem Befestigungskanal (10, 70) zugewandte Innenfläche (13) aufweisen, an der das Ansatzstück mit dem Gewindeabschnitt (33) des Befestigungsmittels gewindemäßig zusammenwirkt, wobei jede Innenfläche nur einen sektorartigen Teilbereich des Befestigungskanals (10) ausmacht und die Innenflächen (13) gemeinsam den Befestigungskanal (10) bilden.

2. Verbindungsanordnung nach Anspruch 1, **dadurch gekennzeichnet, dass** jede Innenfläche einen von mehreren, zueinander auf Lücke angeordneten sektorartigen Teilbereichen des Befestigungskanals (10) begrenzt.

3. Verbindungsanordnung nach Anspruch 1 oder 2, **dadurch gekennzeichnet, dass** das Befestigungsmittel (3) eine Kopfschraube ist, deren Kopf besagten Kopfteil (31) bildet.

4. Verbindungsanordnung nach Anspruch 1 oder 2, **dadurch gekennzeichnet, dass** das Befestigungsmittel (3) ein Gewindestift ist, auf dem eine Mutter zum Ausbilden des Kopfteils (31) vorgesehen ist.

5. Verbindungsanordnung nach einem der vorhergehenden Ansprüche, **dadurch gekennzeichnet, dass** der Gewindeabschnitt (33) ein selbstschneidendes Gewinde aufweist.

6. Verbindungsanordnung nach einem der vorhergehenden Ansprüche, **dadurch gekennzeichnet, dass** das zweite Bauteil (2) zum ersten Bauteil hin vorspringende Führungselemente (21, 22, 54, 63) aufweist, welche den Ansatzstücken (11, 12, 51, 52, 53, 61, 62) seitlich anliegende Flanken aufweisen und eine Bewegung zwischen dem ersten und dem zweiten Bauteil quer zur Achse (C) begrenzen.

7. Verbindungsanordnung nach Anspruch 6, wobei die Führungselemente (25, 54, 63, 73) eine die Ansatzstücke (41, 42, 51, 52, 53, 61, 62) umgebende Hülse bilden.

8. Verbindungsanordnung nach Anspruch 6 oder 7, wobei die Flanken der Führungselemente und/oder Flächen der Ansatzstücke (11, 12), denen die Flanken seitlich anliegen, gegenüber der Richtung der Achse (C) geneigt sind.

9. Verbindungsanordnung nach einem der vorhergehenden Ansprüche, **dadurch gekennzeichnet, dass** das zweite Bauteil (2) zum ersten Bauteil hin vorspringende Führungselemente (421, 422) aufweist, welche in korrespondierende, in den Ansatzstücken (411, 412) vorgesehene Vertiefungen formschlüssig eingreifen.

10. Verbindungsanordnung nach einem der vorhergehenden Ansprüche, **dadurch gekennzeichnet, dass** die Ansatzstücke (11, 12, 411, 412, 51, 52, 53, 71) rippenförmig ausgebildet sind und radial auswärts von der Achse (C) verlaufen.

11. Kraftfahrzeugscheinwerfer, in welchem zwei Komponenten durch eine Verbindungsanordnung nach einem der vorhergehenden Ansprüche verbunden sind.

12. Verfahren zum Herstellen einer Schraubenverbindung zwischen einem ersten und einem zweiten Bauteil (1, 2), insbesondere einer ersten und einer zweiten KFZ-Scheinwerfer-Komponente, unter Verwendung eines Befestigungsmittel (3), welches einen entlang einer Achse (C) verlaufenden Schaftteil (32) mit einem Gewindeabschnitt (33) aufweist, umfassend:
- Einschrauben des Gewindeabschnitts (33) des Befestigungsmittels (3) in einen Befestigungskanal (10, 70) einer Aufnahmestruktur (14) des ersten Bauteils (1), wobei der Befestigungskanal durch zwei oder mehr dem Befestigungsmittel (3) zugewandte, nur sektorweise ausgebildete Innenflächen (13) jeweils eines entlang der Achse (C) verlaufenden Ansatzstücks (11, 12, 411, 412) gebildet ist und über die zumindest eine Innenfläche mit dem Gewindeabschnitt (33) des Befestigungsmittels gewindemäßig zusammenwirkt, wobei die Ansatzstücke (11, 12, 411, 412) als zapfenartige Vorsprünge auf einer Basisfläche (15) des ersten Bauteils (1) ausgebildet sind, die voneinander getrennt sind,
- Einsetzen des Befestigungsmittels (3) in das zweite Bauteil (2) dadurch, dass der Schaftteil (32) durch ein Befestigungsloch (20) des zweiten Bauteils (2) geführt wird, wobei dies vor oder nach dem Einschrauben des Gewindeabschnitts erfolgt,
und sodann
- Fixieren des zweiten Bauteils (2) mittels eines Kopfteils (31) des Befestigungsmittels (3) an dem ersten Bauteil (1).

13. Verfahren nach Anspruch 12, **dadurch gekennzeichnet, dass** als Befestigungsmittel (3) eine Kopfschraube verwendet wird, die zuerst in das Befestigungsloch (20) eingesetzt wird und danach in den Befestigungskanal (10) eingeschraubt wird.

14. Verfahren nach Anspruch 12, **dadurch gekennzeichnet, dass** als Befestigungsmittel (3) ein Gewindestiftverwendet wird, der vorzugsweise vor dem Einsetzen in das zweite Bauteil (2) in den Befestigungskanal (10) eingeschraubt wird, und auf dem Gewindestift nach Anbringen des zweiten Bauteils der Kopfteil fixiert wird.

## Claims

1. Connection assembly in which a screw joint connects a first component and a second component (1, 2), in particular first and second motor vehicle headlamp components, to each other using a fastening means (3), which comprises a head portion (31) and a shank portion (32) extending along an axis (C) and having a threaded portion (33),
wherein the threaded portion (33) of the fastening means (3) is screwed into a fastening channel (10) of the first component (1),
wherein the second component (2) comprises a mounting hole (20) through which the shank portion (32) extends and the second component (2) is fixed to the first component (1) by means of the head portion (31),
**characterized in that**
the first component (1) comprises a base surface (15) and two or more attachment parts (11, 12, 411, 412) which extend along the axis (C) and are realized as stud-like protrusions on the base surface (15), which are separate from each other, and which each have an inner surface (70) facing the fastening channel (10, 70) where the respective attachment part realizes a threaded engagement with the threaded portion (33) of the fastener, each inner surface constituting only a sector-like portion of the fastening channel (10) and the inner surfaces (13) together forming the fastening channel (10).

2. Connection assembly according to claim 1, **characterized in that** each inner surface delimits one of a plurality of sector-like regions of the fastening channel (10), arranged spaced with respect to one another.

3. Connection assembly according to claim 1 or 2, **characterized in that** the fastening means (3) is a cap screw, whose head realizes said head portion (31).

4. Connection assembly according to claim 1 or 2, **characterized in that** the fastening means (3) is a threaded pin destined to be provided with a nut for forming said head portion (31).

5. Connection assembly according to any one of the preceding claims, **characterized in that** the threaded portion (33) includes a self-tapping thread.

6. Connection assembly according to any one of the preceding claims, **characterized in that** the second component (2) comprises guide elements (21, 22, 54, 63) projecting towards the first component and having flanks laterally abutting the attachment parts (11, 12, 51, 52, 53, 61, 62) so as to limit a movement transverse to the axis (C) between the first and the second component.

7. Connection assembly according to claim 6, wherein the guide elements (25, 54, 63, 73) form a sleeve surrounding the attachment parts (41, 42, 51, 52, 53, 61, 62).

8. Connection assembly according to claim 6 or 7, wherein the flanks of the guide elements and/or surfaces of the attachment parts (11, 12) laterally abutting the flanks are inclined with respect to the direction of the axis (C).

9. Connection assembly according to any one of the preceding claims, **characterized in that** the second component (2) comprises guide elements (421, 422) projecting towards the first component and positively engaging corresponding recesses provided in the attachment parts (411, 412).

10. Connection assembly according to any one of the preceding claims, **characterized in that** the attachment parts (11,12, 411, 412, 51, 52, 53, 71) are rib-shaped and extend radially outwards from the axis (C).

11. Motor vehicle headlamp, comprising two components connected by a connection assembly according to any of the preceding claims.

12. Method for producing a screw joint connecting a first component and a second component (1, 2), in particular first and second motor vehicle headlamp components, using a fastening means (3) which comprises a shank portion (32) extending along an axis (C) and having a threaded portion (33), comprising:
- screwing the threaded portion (33) of the fastening means (3) into a fastening channel (10, 70) of a receiving structure (14) of the first component (1), wherein the fastening channel is formed by two or more inner surfaces (13), each belonging to an extension piece (11, 12, 411, 412) extending along the axis (C), facing the fastening means (3) and formed only sector-wise, and realizes a threaded engagement with the threaded portion (33) of the fastening means via the at least one inner surface, the attachment parts (11, 12, 411, 412) being realized as stud-like protrusions on a base surface (15) of the first component (1), separated from each other,
- inserting the fastener (3) into the second component (2) by introducing the shank portion (32) through a mounting hole (20) of the second component (2), which is carried out before or after screwing the threaded portion,
and then
- fixing the second component (2) to the first component (1) by means of a head portion (31) of the fixing means (3).

13. Method according to claim 12, **characterized in that** a head screw is used as fastening means (3), by first inserting it into the mounting hole (20) and then screwing it into the fastening channel (10).

14. Method according to claim 12, **characterized in that** a threaded pin is used as fastening means (3), preferably by screwing it into the fastening channel (10) before being inserted into the second component (2), and the head portion is fixed on the threaded pin after attaching the second component.

## Revendications

1. Ensemble d'accouplement, dans lequel un premier composant et un deuxième composant (1, 2), en particulier premier et deuxième composants de phare de véhicule automobile, sont assemblés l'un à l'autre par vissage à l'aide d'un moyen de fixation (3) qui comprend une partie de tête (31) et une partie de tige (32) s'étendant le long d'un axe (C) et comportant une section filetée (33),
la section filetée (33) du moyen de fixation (3) étant vissée dans un canal de fixation (10) du premier élément de construction (1),
le deuxième composant (2) présentant un trou de fixation (20) à travers lequel s'étend la partie de tige (32), et le deuxième composant (2) étant fixé au premier composant (1) au moyen de la partie de tête (31),
**caractérisé en ce que**
le premier composant (1) comporte une surface de base (15) et deux ou plusieurs embouts (11, 12, 411, 412) qui s'étendent le long de l'axe (C), étant formés comme des saillies en forme de tenon sur la surface de base (15), séparés l'un de l'autre, et qui présentent chacun une surface intérieure orienté vers le canal de fixation (10, 70), où l'embout coopère par vissage avec la partie filetée (33) du moyen de fixation, chaque surface intérieure ne constituant qu'une zone partielle en forme de secteur du canal de fixation (10) et les surfaces intérieures (13) formant ensemble le canal de fixation (10).

2. Ensemble d'accouplement selon la revendication 1, **caractérisé en ce que** chaque surface intérieure délimite l'une de plusieurs zones partielles en forme de secteur du canal de fixation (10), disposées les unes par rapport aux autres de manière à former un espace.

3. Ensemble d'accouplement selon la revendication 1 ou 2, **caractérisé en ce que** le moyen de fixation (3) est une vis à tête dont la tête forme ladite partie de tête (31).

4. Ensemble d'accouplement selon la revendication 1 ou 2, **caractérisé en ce que** le moyen de fixation (3) est une vis sans tête sur laquelle est prévu un écrou pour former ladite partie de tête (31).

5. Ensemble d'accouplement selon l'une quelconque des revendications précédentes, **caractérisé en ce que** la partie filetée (33) comprend un filetage autotaraudeur.

6. Ensemble d'accouplement selon l'une quelconque des revendications précédentes, **caractérisé en ce que** le deuxième composant (2) comporte des éléments de guidage (21, 22, 54, 63) en saillie vers le premier composant, qui présentent des flancs en appui latéral sur les embouts (11, 12, 51, 52, 53, 61, 62) et qui limitent un déplacement transversal à l'axe (C) entre le premier et le deuxième composant.

7. Ensemble d'accouplement selon la revendication 6, dans lequel les éléments de guidage (25, 54, 63, 73) forment un manchon entourant les embouts (41, 42, 51, 52, 53, 61, 62).

8. Ensemble d'accouplement selon la revendication 6 ou 7, dans lequel les flancs des éléments de guidage et/ou les surfaces des embouts (11, 12) sur lesquelles lesdits flancs s'appuient latéralement sont inclinés par rapport à la direction de l'axe (C).

9. Ensemble d'accouplement selon l'une quelconque des revendications précédentes, **caractérisé en ce que** le deuxième composant (2) présente des éléments de guidage (421, 422) en saillie par rapport au premier composant, qui s'engagent par complémentarité de forme dans des cavités correspondantes prévues dans les embouts (411, 412).

10. Ensemble d'accouplement selon l'une quelconque des revendications précédentes, **caractérisé en ce que** les embouts (11, 12, 411, 412, 51, 52, 53, 71) sont en forme de nervures et s'étendent radialement vers l'extérieur de l'axe (C).

11. Projecteur de véhicule automobile dans lequel deux composants sont reliés par un ensemble d'accouplement selon l'une quelconque des revendications précédentes.

12. Procédé de réalisation d'un assemblage par vis entre un premier composant et un deuxième composant (1, 2), en particulier premier et deuxième composants de phare de véhicule automobile, en utilisant un moyen de fixation (3) qui comprend une partie de tige (32) s'étendant le long d'un axe (C) et comportant une section filetée (33), comprenant :
- visser la section filetée (33) du moyen de fixation (3) dans un canal de fixation (10, 70) d'une structure de réception (14) du premier composant (1), le canal de fixation étant délimité par deux ou plusieurs surfaces intérieures (13) des pièces d'embout respectives (11, 12, 411, 412), orientées vers le moyen de fixation (3) et réalisées seulement par secteurs, et coopérant par filetage avec la section fileté (33) du moyen de fixation par l'intermédiaire de ladite au moins une surface intérieure, les embouts (11, 12, 411, 412) étant réalisés sous la forme de tenons en saillie sur une surface de base (15) du premier élément de construction (1), qui sont séparés les uns des autres,
- insérer le moyen de fixation (3) dans le deuxième composant (2) en faisant passer la partie de tige (32) à travers un trou de fixation (20) du deuxième composant (2), ceci étant effectué avant ou après le vissage de la partie filetée,
et ensuite
- fixer le deuxième composant (2) au premier composant (1) au moyen d'une partie de tête (31) du moyen de fixation (3).

13. Procédé selon la revendication 12, **caractérisé en ce que** l'on utilise comme moyen de fixation (3) une vis à tête qui est d'abord insérée dans le trou de fixation (20) et qui est ensuite vissée dans le canal de fixation (10).

14. Procédé selon la revendication 12, **caractérisé en ce que** l'on utilise comme moyen de fixation (3) une vis sans tête qui est vissée dans le canal de fixation (10) de préférence avant d'être insérée dans le deuxième élément de construction (2), et sur laquelle la partie de tête est fixée après la mise en place du deuxième élément de construction.
